(19) Europäisches Patentamt
European Patent Office
Office européen des brevets

(11) Veröffentlichungsnummer: **0 495 369 A1**

# (12) EUROPÄISCHE PATENTANMELDUNG

(21) Anmeldenummer: **92100115.2**

(51) Int. Cl.[5]: **C09B 62/04**

(22) Anmeldetag: **07.01.92**

(30) Priorität: **16.01.91 DE 4101067**

(43) Veröffentlichungstag der Anmeldung:
**22.07.92 Patentblatt 92/30**

(84) Benannte Vertragsstaaten:
**CH DE FR GB LI**

(71) Anmelder: **BAYER AG**

**W-5090 Leverkusen 1 Bayerwerk(DE)**

(72) Erfinder: **Jäger, Horst, Dr.**
**Carl-Rumpff-Strasse 37**
**W-5090 Leverkusen 1(DE)**

## (54) Verfahren zur Herstellung von Reaktivfarbstoffen.

(57) Die Erfindung betrifft ein verbessertes Verfahren zur Herstellung von Farbstoffen auf Basis wenigstens eines Triphendioxazines, welches über ein Triazin mit einem weiteren Chromophoren verknüpft ist bei pH 5,5 bis 2,0 und einer Temperatur von 50 bis 100 ° C.

EP 0 495 369 A1

Die Erfindung betrifft ein Verfahren zur Herstellung von Reaktivfarbstoffen.

Aus der US-A-4 005 551 sind Triphendioxazinfarbstoffe bekannt, bei denen 2 Chromophore über einen Triazinring verknüpft sind. Das Verfahren zur Herstellung ist verbesserungswürdig.

Aufgabe der vorliegenden Erfindung ist die Bereitstellung eines verbesserten Herstellungsverfahrens.

Die Erfindung betrifft ein Verfahren zur Herstellung von Farbstoffen der Formel

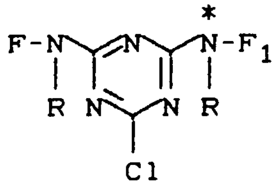

(I)

dadurch gekennzeichnet, daß man eine Verbindung der Formel

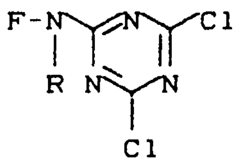

(II)

mit einem Farbstoff der Formel

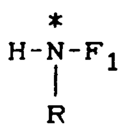

(III)

im wäßrigen Medium und im pH-Bereich von 5,5 bis 2,0, insbesondere 5,0 bis 2,5, und bei einer Temperatur von 50 bis 100 °C, insbesondere 70 bis 80 °C, zu einem Farbstoff (I) kondensiert, wobei bedeuten

F Rest eines Triphendioxazinfarbstoffes, vorzugsweise

F

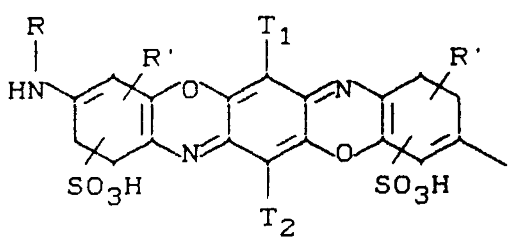

(IIIa)

R unabhängig voneinander Wasserstoff, $C_1$-$C_4$-Alkyl, oder substituiertes $C_1$-$C_4$-Alkyl,

R' Wasserstoff oder üblicher Substituent eines Triphendioxazinfarbstoffes, insbesondere Halogen, Alkyl, Alkoxy, Carboxy

$T_1$, $T_2$ Wasserstoff, Chlor, Brom, $C_1$-$C_4$-Alkyl, $C_1$-$C_4$-Alkoxy, Phenyl oder Phenoxy, die substituiert sein können

$F_1$ Rest eines Chromophors.

Beispiele für R sind: $CH_3$, $C_2H_5$, n-$C_3H_7$, i-$C_3H_7$, n-$C_4H_9$, n-$C_6H_{13}$, die beispielsweise durch OH, $OCH_3$, $OC_2H_5$, COOH, $SO_3H$, $OSO_3H$, CN, Cl substituiert sein können.

Substituenten der gegebenenfalls substituierten $C_1$-$C_4$-Alkyl- und $C_1$-$C_4$-Alkoxyreste $T_1$ bzw. $T_2$ sind beispielsweise $C_1$-$C_4$-Alkoxy oder $OSO_3H$.

Substituenten der gegebenenfalls substituierten Phenyl- und Phenoxyreste $T_1$ bzw. $T_2$ sind beispielsweise Cl, Br, $C_1$-$C_4$-Alkyl, $C_1$-$C_4$-Alkoxy und $SO_3H$.

Geeignete Substituenten R' sind beispielsweise folgende: Halogen wie Cl, $C_1$-$C_4$-Alkyl, $C_1$-$C_4$-Alkoxy, COOH.

Die Sulfogruppe in (IIIa) steht in o-Stellung zum Substituenten

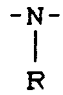

bzw.

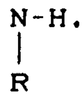

$F_1$ bedeutet vorzugsweise einen chromophoren Rest aus der Azo-, Formazan-, Anthrachinon, Phthalocyanin oder Triphendioxazin-Farbstoffreihe, wobei die Iminogruppe

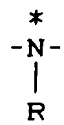

direkt an ein aromatisch-carbocyclisches oder aromatisch-heterocyclisches C-Atom in $F_1$ geknüpft.

Bevorzugt ist die Herstellung von Farbstoffen (I), in denen R = Wasserstoff und $F_1$ einen Rest F bedeutet. Besonders bevorzugt ist die Herstellung von Farbstoffen (I), in denen $F_1$ identisch mit F ist und bei denen R' für Wasserstoff und $T_1$ und $T_2$ für Chlor stehen.

Die Farbstoffe (II) erhält man durch einseitige Kondensation von Farbstoffen der Formel

F-H

mit Cyanurchlorid, wie sie zum Beispiel aus der DE-A-40 05 551, Beispiel 1, bekannt ist.

Farbstoffe der Formel (III) sind aus der Literatur in großer Zahl bekannt.

Beispiele sind:

3.1)

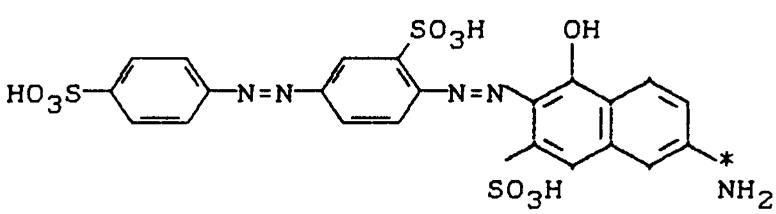

3.2)

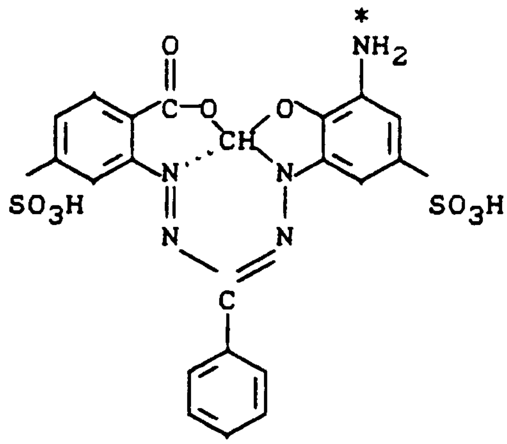

3.3)

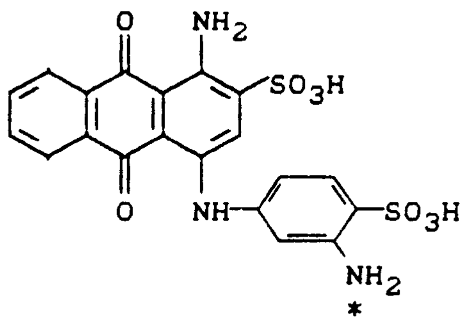

3.4)

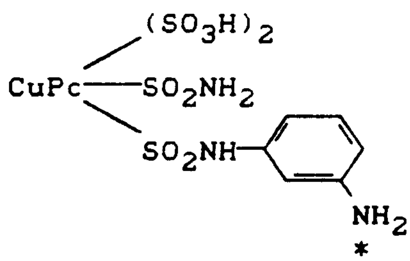

3.5)

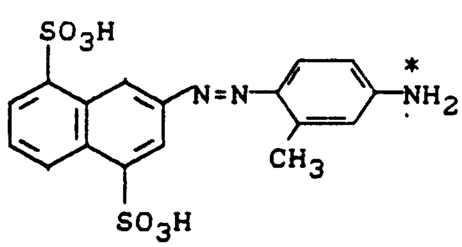

3.6)

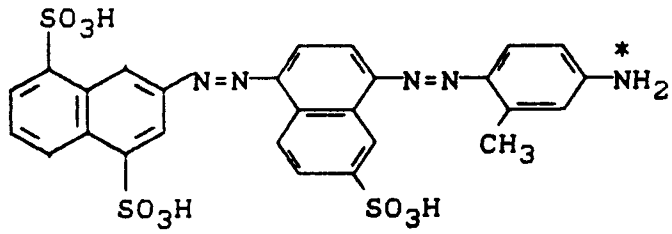

3.7)

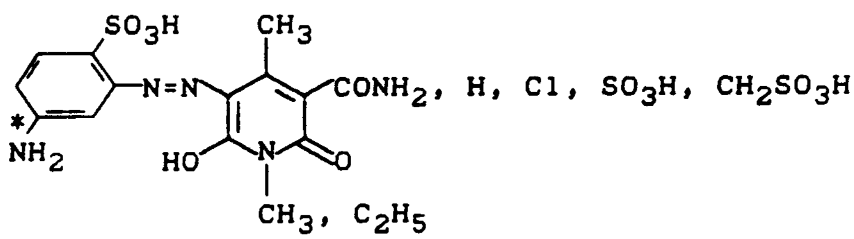

3.8)

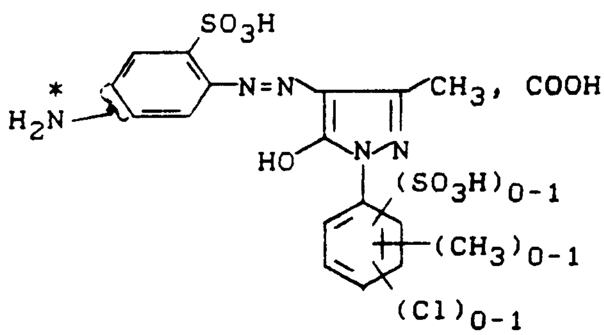

3.9)

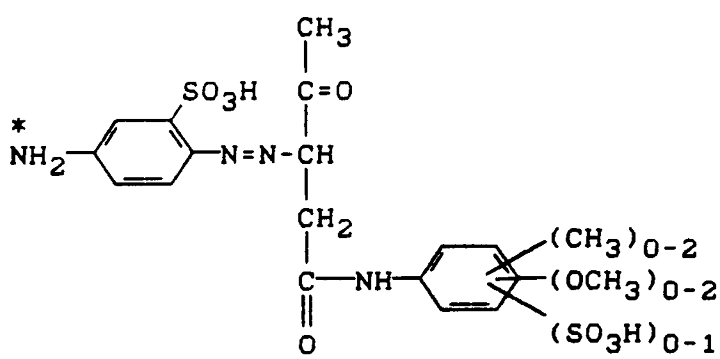

3.10)

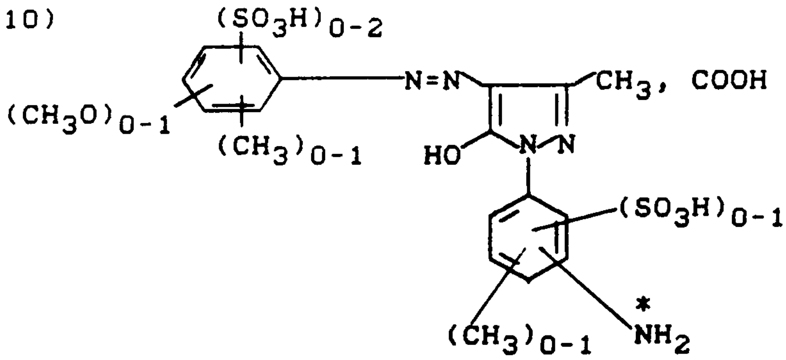

3.11)

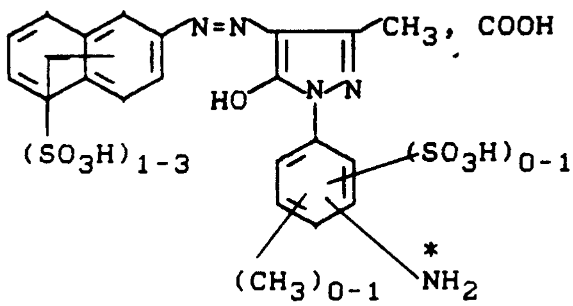

3.12)

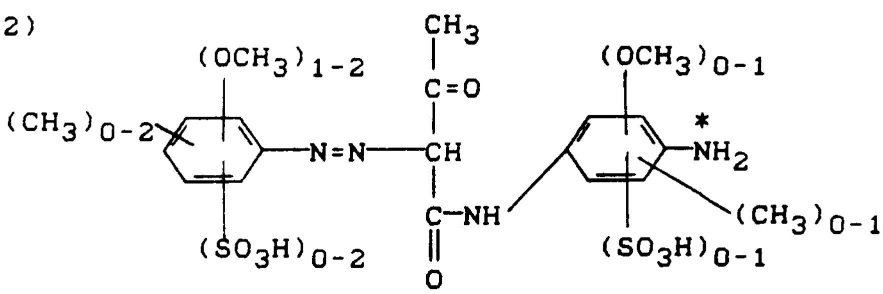

Bevorzugt werden die Farbstoffe (II) in Form ihrer Lithiumsalze eingesetzt. Vorzugsweise führt man die Reaktion in Gegenwart eines Puffers aus, der für den pH-Bereich von 2,0 bis 5,5 geeignet ist.

Beispiel 1

0,05 Mol des Di-Lithiumsalzes des Farbstoffes der Formel

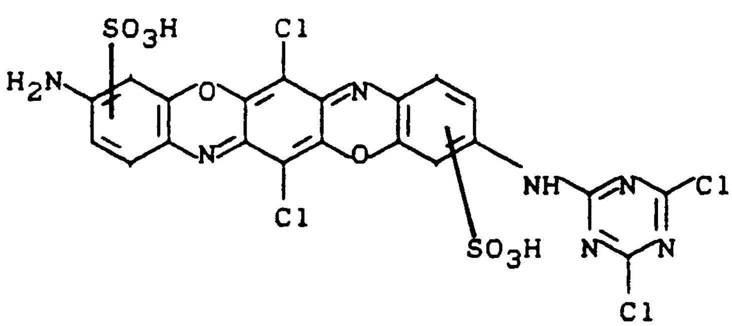

(erhältlich durch Kondensation des Di-Lithiumsalzes der 2,9-Diamino-6,13-dichlor-triphendioxazin-disulfonsäure mit Cyanurchlorid in Gegenwart von Lithiumhydroxid) die sich in 700 ml Wasser befinden, werden bei Raumtemperatur mit einer neutralen Lösung des Di-Lithiumsalzes der 2,9-Diamino-6,13-dichlor-triphendioxazin-disulfonsäure in 600 ml Wasser versetzt. Man stellt mit 2 ml Phosphorsäure den pH auf 5,0 und erwärmt dann das Reaktionsgemisch auf 75° C. Der pH fällt während der Kondensation auf ca. 2,5 bis 3 ab. Nach ca. 8 bis 10 Stunden ist die Umsetzung beendet, Man stellt dann den pH mit Lithiumhydroxidlösung auf pH 7. Durch Zugabe von ca. 4 Volumen-% Natriumchlorid wird der Farbstoff abgeschieden und kann durch Absaugen isoliert werden.

In Form der freien Säure entspricht er der Formel

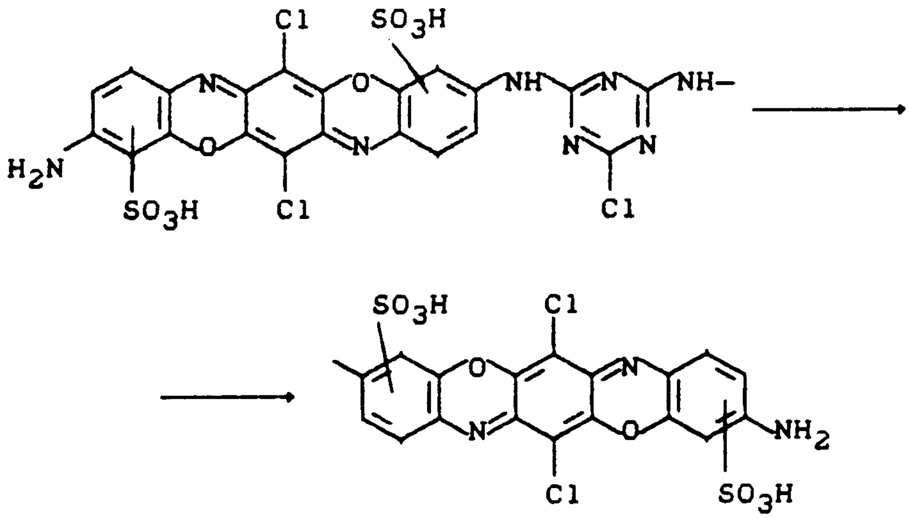

(I.1)

Beispiel 2

0,1 Mol 2,9-Diamino-6,13-dichlor-triphendioxazin-disulfonsäure, die als neutrales Di-Lithiumsalz in 1,3 l Eiswasser gelöst sind, werden mit 10 g Cyanurchlorid versetzt und im pH-Bereich von 5 bis 5,5, der durch Zutropfen von verdünnter Lithiumhydroxidlösung eingehalten wird, kondensiert. Nach ca. 3 bis 4 Stunden sind 50 % des Triphendioxazinfarbstoffs halbseitig acyliert. Man erwärmt auf 72 bis 74° C, wobei man den pH auf 3,5 abfallen läßt und dann bei 3,5 bis 4,5 durch Zugabe von verdünnter Lithiumhydroxydlösung hält. Nach ca. 8 bis 10 Stunden ist die Kondensation beendet. Man stellt auf pH 7 und salzt den Farbstoff mit 4 Volumen-% Natriumchlorid aus. Der Farbstoff ist identisch mit dem nach Beispiel 1 erhaltenen Produkt.

## Patentansprüche

**1.** Verfahren zur Herstellung von Farbstoffen der Formel

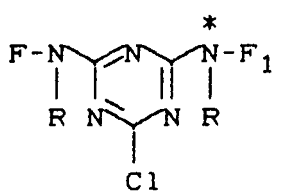

(I)

dadurch gekennzeichnet, daß man eine Verbindung der Formel

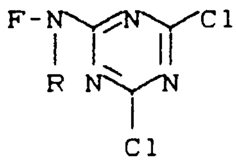

(II)

mit einem Farbstoff der Formel

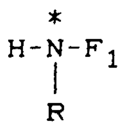

(III)

im wäßrigen Medium und im pH-Bereich von 5,5 bis 2,0 und bei einer Temperatur von 50 bis 100 °C zu einem Farbstoff (I) kondensiert, wobei bedeuten

F Rest eines Triphendioxazinfarbstoffes,

R unabhängig voneinander Wasserstoff, $C_1$-$C_4$-Alkyl, oder substituiertes $C_1$-$C_4$-Alkyl,

$F_1$ Rest eines Chromophors.

**2.** Verfahren nach Anspruch 1, dadurch gekennzeichnet, daß F folgender Formel entspricht

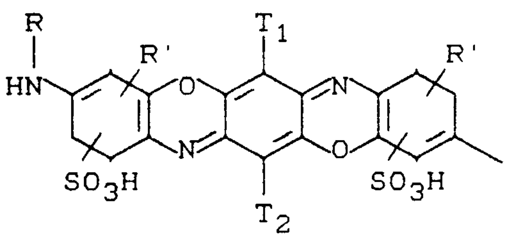

(IIIa)

worin bedeuten

R' Wasserstoff oder üblicher Substituent eines Triphendioxazinfarbstoffes,

$T_1$, $T_2$ Wasserstoff, Chlor, Brom, $C_1$-$C_4$-Alkyl, $C_1$-$C_4$-Alkoxy, Phenyl oder Phenoxy, die substituiert sein können und worin

R eine der in Anspruch 1 unter R angegebene Bedeutung hat.

**3.** Verfahren nach wenigstens einem der vorhergehenden Ansprüche, dadurch gekennzeichnet, daß $F_1$ einen chromophoren Rest aus der Azo-, Formazan-, Anthrachinon, Phthalocyanin oder Triphendioxazin-Farbstoffreihe, wobei die Iminogruppe

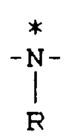

direkt an ein aromatisch-carbocyclisches oder aromatisch-heterocyclisches C-Atom in $F_1$ geknüpft ist, bedeutet.

**4.** Verfahren nach wenigstens einem der vorhergehenden Ansprüche, dadurch gekennzeichnet, daß die Farbstoffe (II) in Form ihrer Lithiumsalze verwendet werden.

**5.** Verfahren nach wenigstens einem der vorhergehenden Ansprüche, dadurch gekennzeichnet, daß man die Reaktion in Gegenwart eines Puffers durchführt.

**6.** Verfahren nach wenigstens einem der vorhergehenden Ansprüche, dadurch gekennzeichnet, daß

R = $CH_3$, $C_2H_5$, n-$C_3H_7$, i-$C_3H_7$, n-$C_4H_9$, n-$C_6H_{13}$, die beispielsweise durch OH, $OCH_3$, $OC_2H_5$, COOH, $SO_3H$, $OSO_3H$, CN, Cl substituiert sein können,

R' = Cl, $C_1$-$C_4$-Alkyl, $C_1$-$C_4$-Alkoxy, COOH.

**7.** Verfahren nach wenigstens einem der vorhergehenden Ansprüche, dadurch gekennzeichnet, daß

R = H

$F_1$ = F

R' = H

$T_1$, $T_2$ = Cl.

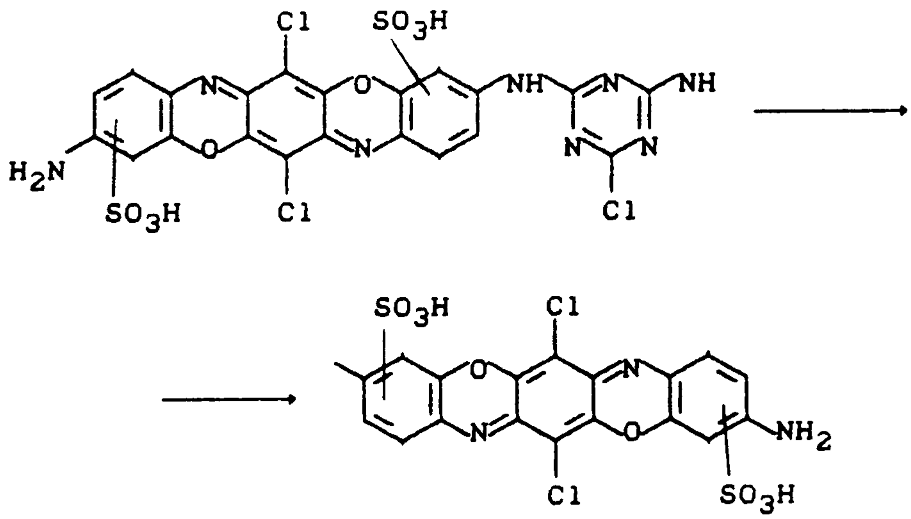

(I.1)

Europäisches Patentamt

# EUROPÄISCHER RECHERCHENBERICHT

Nummer der Anmeldung

EP 92 10 0115

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | GB-A-2 228 738 (SANDOZ)<br>* Anspruch 1 * & DE-A-4 005 551 (Kat. D,A)<br>--- | 1-7 | C 09 B 62/04 |
| A | EP-A-0 170 838 (BAYER)<br>* Anspruch 7 *<br>--- | 1-4,6 | |
| P,X | EP-A-0 448 815 (BAYER)<br>* Anspruch 1; Seite 6, Zeilen 50-54; Beispiel 1 *<br>--- | 1-4,6 | |
| P,X | EP-A-0 425 907 (BAYER)<br>* Ansprüche 1,5; Seite 5, Zeilen 19-23; Beispiel 1 *<br>----- | 1-4,6,7 | |
| | | | RECHERCHIERTE SACHGEBIETE (Int. Cl.5) |
| | | | C 09 B |

Der vorliegende Recherchenbericht wurde für alle Patentansprüche erstellt

| Recherchenort | Abschlußdatum der Recherche | Prüfer |
|---|---|---|
| DEN HAAG | 12-02-1992 | GINESTET M.E.J. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

& : Mitglied der gleichen Patentfamilie, übereinstimmendes Dokument

EPO FORM 1503 03.82 (P0403)